# EUROPEAN PATENT APPLICATION

(11) **EP 1 132 186 A1**
(43) Date of publication of application: **12.09.2001**
(21) Application number: 00830244.0
(22) Date of filing: 31.03.2000
(51) Int. Cl.: B28B 11/04, B05B 15/12

(54) **A glazing station for ceramic tiles, with an alternating rotating hood**

(30) Priority: 15.04.1999 IT MI990787
(71) Applicant: C.I.ME.S. S.r.l., 41053 Maranello (MO) (IT)
(72) Inventor: Raneri, Cosimo Damiano, 41053 Maranello (Modena) (IT)
(74) Representative: Gotra, Stefano

(57) **Abstract**

The station (10, 110) for glazing ceramic tiles (74, 174) and the like is equipped with a distributor device which can be of a spray-gun type (12) or of a disk-pack type (112), and comprises a hood (18, 118) having an intermediate part (40, 140) which is cylindrical and has a horizontal or subhorizontal axis (40, 140). The intermediate part (40, 140) can rotate about the axis (46, 146) alternatingly and exhibits a slot (44) which develops transversally to the rotation axis (46, 146)through an angular range which is at least equal to that of the alternating motion of the intermediate part (40, 140) of the hood (18, 118). Means (66, 166) are provided for washing an internal wall of the intermediate part (40, 140) with glaze. A fixed external central portion (56, 156, 177) arranged at the slot (44) ofd the intermediate part (40, 140) enables the slot (44) to be closed. In a station equipped with a disk-pack (12) the fixed central portion (156, 177) is formed at least in part like conventional known central parts in known stations of this type.

## Description

The invention relates to stations for glazing ceramic tiles and similar manufactures, provided with a distributing device for the glaze, either of the spray type or the disk-pack type.

Skilled persons in the sector know that traditional spray-glazing stations have a hollow hood having two aligned and opposite openings, one for entry and the other for exit. The hood is crossed by a belt conveyor device which brings in the tiles (previously-loaded on the belt) consecutively through the inlet opening, passes them below a spray-gun situated on the ceiling of the hood, so that the tile upper surface is glazed, and then removes the tiles through the outlet opening.

These glazing stations do not enable a continuous production to be achieved, since periodically production has to be halted (usually every four hours) so that the internal surface of the hood can be washed with water in order to prevent formation on the hood surface of drops or lumps of glaze which might fall onto the passing tiles, leading to their necessary rejection.

To eliminate the above-described drawback, spray-glazing stations have been made which are provided with scrapers to periodically scrape the internal surfaces of the hood, so that as the tiles transit there is no risk of dripping or lumps of glaze falling onto the tiles. Stations of this type are described in Italian patent no. 1279930, in the name of CIMES, in which two variations are described: a first in which the scrapers move about the internal surfaces of the hoods; and a second in which the surfaces themselves move in relation to the scraper, which remains stationary. In particular, in an embodiment which is illustrated and described in Italian patent 1279930, the hood comprises a superiorly-open fixed central part, the spray gun being located in the opening, and two fixed lateral end parts, distanced from the central fixed part, the entry and exit openings being afforded in a fixed lateral part. The above-mentioned three fixed parts of the hood are connected to each other by two respective truncoconical parts, which are opposite, coaxial and have a horizontal axis, as well as being rotatable about their common axis. Means for actuating continuously rotate the two rotatable truncoconical parts. A fixed scraper for the surface of each of the two rotatable parts of the hood is arranged in the lower zone of the relative surface to be scraped.

It is clear that the above-described solution is expensive and rather complex, as well as being expensive.

The prior art also teaches glazing stations for tiles or similar products which instead of a spray gun use a glaze distributor device constituted in essence by a pack of identical disks, coaxial and equidistanced, which pack rotates at a predetermined speed about its own horizontally-arranged axis. The disks are fixed on a holed hub which is supplied with liquid glaze, so that a veil of glaze covers the surface of each disk. Following a rotation of the disk pack at a predetermined speed, the centrifugal force created sends out minute drops of glaze from the disk surfaces, which drops are distributed all about the disks. While the drops of glaze sent downwards fall in part on the tiles transiting on the conveyor belt below the packs, the remaining drops are intercepted by the internal walls of the station hood. This glaze then forms rivulets and drips downwards, by force of gravity, and is collected at the bottom of the hood and recycled. The hood is fixed and exhibits a higher central part, containing the disk pack, and two lateral and opposite parts forming a single body with the central part, and affording the entry and exit openings for the tiles. Since it is the central part of the hood which gives rise to the formation of drops and lumps which can fall on the tiles, the central part is specially conformed, as described in Italian patent 1147421, again belonging to CIMES, owner of the present application. The central part, then, which is most subject to the phenomenon of drip- or lump-falling, has, above the horizontal plane passing through the axis of the disk pack, a special shape formed by joining at their bases two identical and coaxial semitruncoconical elements. The rotation axis of the disk pack is parallel to the common axis of the two semitruncoconical elements. The tile conveyor belt also extends parallel to the disk pack axis, but is laterally displaced with respect to a vertical plane passing through said axis; laterally displaced, that is, to the side where the glaze falls downwards, cast by the rotating disk pack.

It has been verified that for high glaze application capacity (8-10 g/dm² ), the drawback of drop or lump formation in the central part of the hood was not completely eliminated. In Italian utility model 224576, owned by the present applicant, this drawback is overcome. This result was obtained by placing a vertical diaphragm at the base of the two semicones forming the upper portion of the central part of the hood, a lower edge of which vertical diaphragm is in the shape of an upturned V.

But not even this innovation solved the problem of dripping once and for all, as a few drops still formed internally of the two lateral parts of the hood. The main aim of the present invention is to provide a glazing hood for ceramic tiles and the like, of both spray and disk-pack types, which does not suffer from the above-described drawbacks existing in known hoods, and which in particular in the case of spray-type hoods, does not require the presence of scrapers.

The above aim is achieved thanks to the glazing hood of the present invention, which can be of the spray type or the disk-pack type, which comprises a hood having two fixed parts in one of which there is a hole for entrance and in the other of which there is a hole for exit of the transiting tiles, characterised in that the intermediate part of the hood connecting the two end parts is cylindrical, has a horizontal or sub-horizontal axis and can rotate alternatingly about the axis through less than a full revolution; the intermediate part of the hood exhibiting a slot which develops in a transversal direction to the rotation axis through an angular breadth which is at least equal to that of the alternating rotary motion of the intermediate part of the hood; and characterised in that means for washing are provided internally of the rotating intermediate part of the hood, which means for washing cover the internal wall of the hood with glaze; and also characterised in that a fixed central portion is situated at the slot in the rotating intermediate part, which fixed central part is external to the rotatable intermediate part and covers the slot afforded in the rotatable intermediate part; in the case of a cabin equipped with a disk-pack, the fixed central portion being conformed at least partially identically to a conventional central part as known from other hoods of this type.

The alternating rotating motion of the rotating intermediate part of the glazing hood in the present invention, combined with the washing of the internal surface of the intermediate part, simply, cheaply and completely prevents the formation of drops or lumps of glaze which can fall onto the transiting tiles. Preferably the range of alternating motion of the intermediate part does not exceed 300°.

The invention will be more easily understood from the following description of an embodiment thereof in a spray configuration and in a disk-pack configuration. In the following description reference will be made to the accompanying figures of the drawings, in which:
figure 1 is a side-elevation of a glazing station according to the present invention, of the spray type;
figure 2 is a side-elevation of the station of figure 1, according to arrow 2 of figure 1;
figure 3 is a partial transversal section made according to line 3-3 of figure 1;
figure 4 is a partial transversal section made according to line 4-4 of figure 1;
figure 5 is a transversal section of a variant of the spray station of the preceding figures, made along the half-line of the station and looking leftwards;
figure 6 is a view from above of only the rotatable intermediate part of the spray-station;
figure 7 is a graphical representation of the range of rotation of the above-mentioned rotatable intermediate part, corresponding to an angular range of the transversal slot made therein;
figure 8 is a plan view from above of only the fixed central portion covering the slot in the rotatable intermediate part, the latter part being represented by a broken line;
figure 9 is a graphical representation of the angular range of the slot in the central fixed portion, through which the spray gun operates;
figure 10 is a side elevation of a glazing station according to the present invention, but equipped with a disk-pack;
figure 11 is a side-elevation of the station of figure 10, according to arrow 11 of figure 10;
figure 12 is a partial transversal section made according to line 12-12 of figure 10;
figure 13 is a partial transversal section made according to line 13-13 of figure 10; and
figure 14 is a transversal section made according to line 14-14 of figure 10.

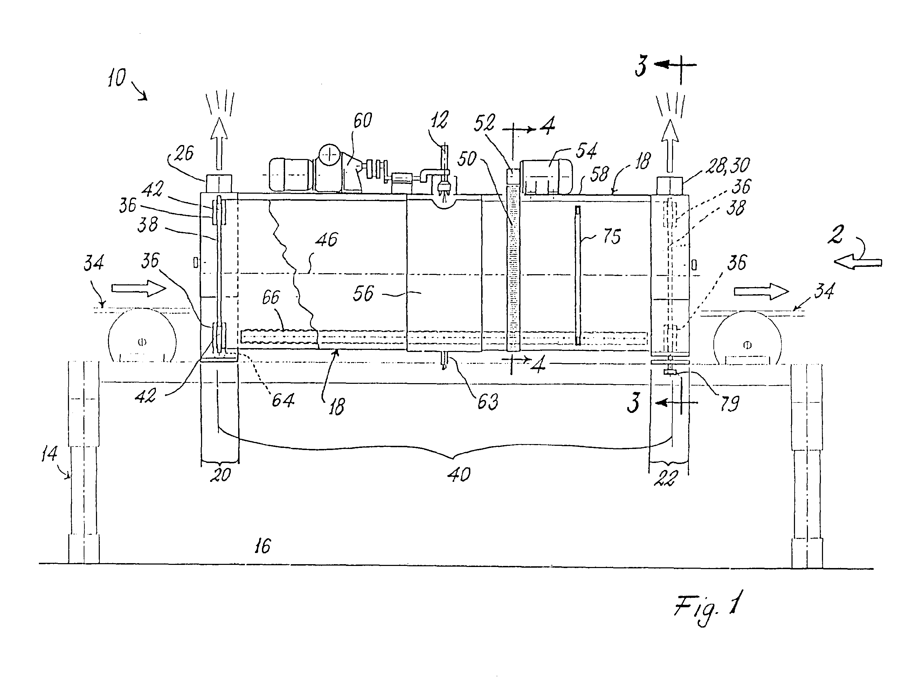

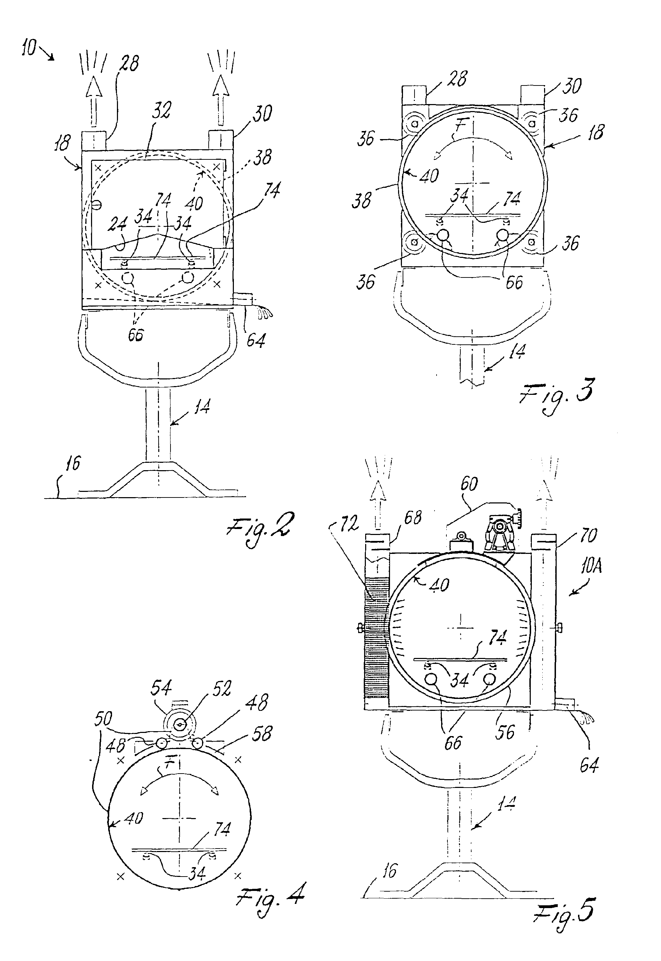

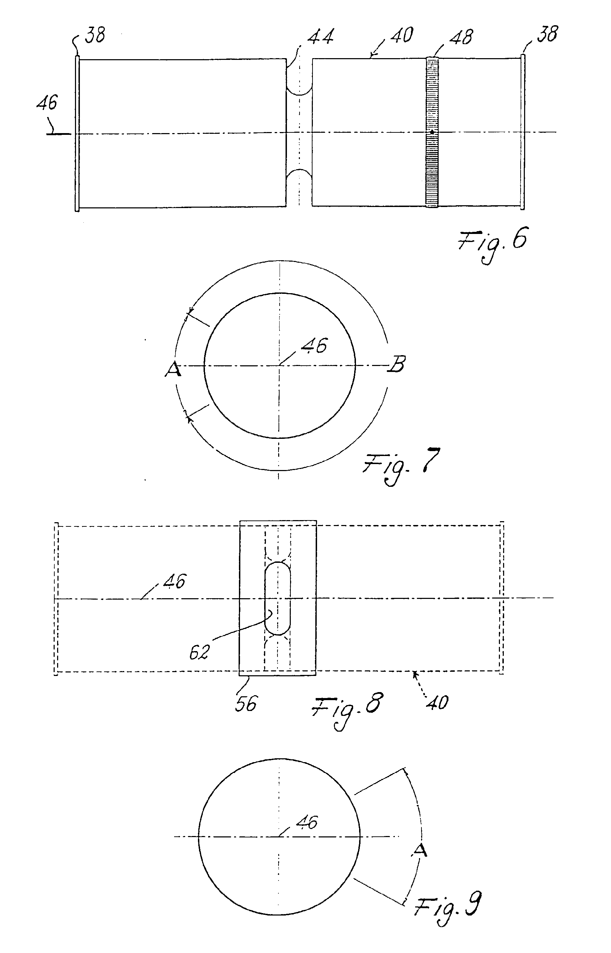

With reference to figures 1 to 4, the glazing station 10, of the spray type (the spray gun being denoted by 12 in figure 1), comprises a support structure (not illustrated in the drawings for greater simplicity), which can be of a type which enables the station 10 to be removed and substituted with another type of station. The station 10 comprises a hood 18 having two fixed end parts, respectively 20 and 22, in which, again respectively, a conventional entrance opening (not shown) and exit 24 (figure 2) are afforded. The two fixed end parts 20 and 22 further comprise aspiration hoods each having two intakes. As regards the left end part 20, only one aspiration intake 26 is visible, while for the right end part 22 both intakes 28 and 30 are in view. Inspection hatches are provided on the external surface of each of the end parts 20 and 22 of the hood 18 (the inspection hatch on the right side is visible in figure 1 and denoted by 32); the hatches are removable to afford access to the inside of the hood 18. The hood 18 inclination with respect to the horizontal can be slightly varied by means of an adjustment device indicated in its entirety by 79.

The hood 18 is crossed through by a conveyor belt 34 borne on a ground-fixed structure 14. The belts 34 pass through the inlet opening (not shown) and exit through the outlet opening 24 of the station 10. When the conveyor belt 34 is operating, ceramic tiles (not shown for reasons of simplicity) or like products - previous laid in succession on the belt 34 - transit through the hood 18 of the glazing station 10.

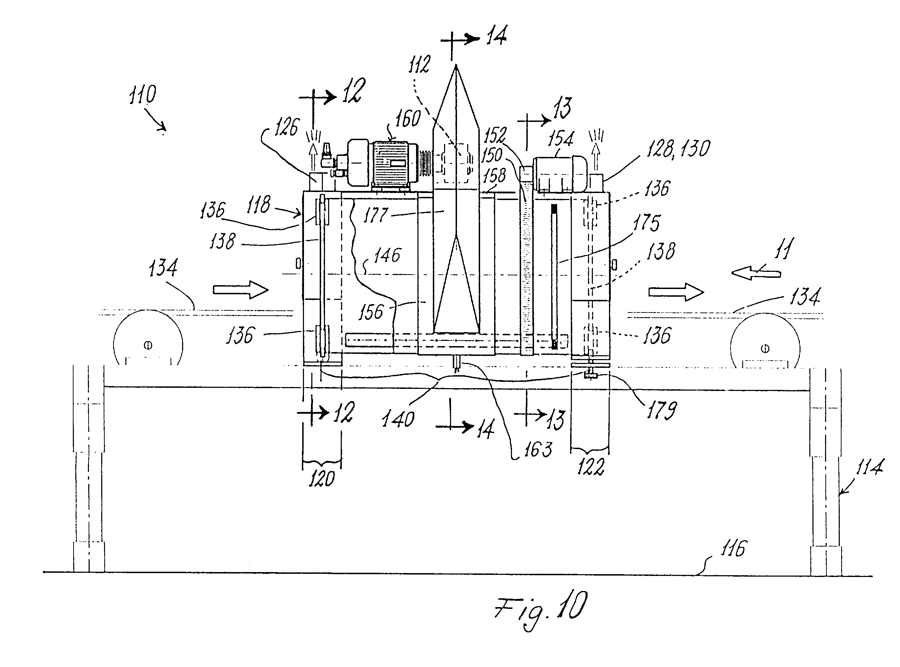

As can be seen in figures 1 and 3, each of the two fixed end parts 20 and 22 bears four idle and coplanar rollers 36 having a gullet 42 for receiving a relative end flange 38 of an intermediate cylindrical part 40, open at the two ends, of the hood 18. The intermediate cylindrical part 40 is best visible in figure 6, which shows it in a view from above. As can be seen in figure 6, the intermediate cylindrical part 40 exhibits a slot 44 extending transversally to the axis 46 of the intermediate part 40, through an angular range of 300° (the range being indicated by B in figure 7, with A in the same figure denoting the angular range, 60°, of the part of the full revolution not interacting with the slot 44).

A geared chain or belt (denoted by 50 in figures 1 and 4) is wound about the intermediate part 40 and is fixed thereto at the lowest point thereof. The chain or belt 50 is made by two idle pinions 48 to pass over a pinion 52 keyed onto the shaft of an electric motor 54. When the motor 54 is started up an alternating motion is imparted on the intermediate part 40 (denoted by the double arrow F in figures 3 and 4) about axis 46. The angular range of this alternating motion is equal to B (see figure 7) and can be regulated by a conventional adjustable endrun device, denoted by 75 and visible in figure 1. Obviously other mechanical devices can be used for obtaining the alternating rotary motion of the intermediate part 40.

It is worth noting that the transversal slot 44 may have an angular extension which exceeds 300°, even as much as 360°, though in such a case the intermediate part is divided into two distinct parts which will have to be separately motorized.

The slot 44 in the intermediate part 40 is covered by the central portion or collar 56 which is fixed and borne by the longitudinal crossbar 58 (figure 1) which also supports the motor 54, as well as the spray gun 12 and the spray actuating device 60, the crossbar resting at its two ends on the fixed end parts 20 and 22. The collar 56 covers the transversal slot 44 of the rotatable intermediate part 40 and also exhibits a transversal slot 62, the angular length of which, represented indicatively in figure 9, is in the present illustration equal (and therefore denoted by A) to the angular range of the non-slotted portion of the rotatable intermediate part 40 (as can be seen in figure 8, where the rotatable intermediate part 40 is represented by a broken line). The slot 62 in the collar 56 enables the spray gun 12 to be presented internally of the intermediate cylindrical part 40 and to perform its task. It must be clear, however, that the angular length of the slots 44 and 62 will be chosen according to specific needs.

The collar 56 exhibits a rim (not shown in the figures for the sake of simplicity) which is inwardly-turned at each of its circumferential edges. The rim is for preventing the glaze from exiting through the slot 44 of the rotatable intermediate part 40 and dripping out of the collar 56, the glaze being then evacuated through the lower discharge 63 and recycled. A further discharge is provided on one or both the fixed lateral parts 20, 22 of the hood 18, in the illustrated embodiment of figures 1 and 2 only one discharge 64 being provided at the fixed lateral part 20.

Internally of the rotatable intermediate part 40 there are two means for washing 66, constituted by respective perforated pipes one end of which is supplied with the same glaze being used by the spray gun 12. The glaze exiting from the pipes 66 enables the internal surface of the intermediate part 40 to be washed down - the intermediate part 40, as has been previously explained, rotating alternatingly to a range which in the illustrated embodiment is 300°. The glaze is then removed via the discharges 63, 64 and recycled.

It has been shown that by using the above method drops and lumps of glaze (which could fall onto the transiting tiles) do not form on the internal surface of the rotatable intermediate part. Thus a glazing station of this type can operate continuously, as it is necessary to wash the inside of the hood 18 with water only when work is suspended at the end of a work shift or because the glaze colour has to be changed.

Figure 5 illustrates a further embodiment 10A of the above-described spray-glazing station 10. The only difference with respect to the station 10 is that the embodiment 10A exhibits, at the fixed intermediate collar 56, two aspiration intakes 68 and 70 comprising a relative fume filter (the filter 72 being represented, for the sake of simplicity, only at the intake 68). The fumes (i.e. the part of the glaze which is atomized by the spray gun but which remains in suspension in the air) are aspirated through the slot 44 and the relative openings (not shown) in communication with the corresponding filter 72, as denoted by the arrows in figure 5.

Reference will now be made to the glazing station 110 of figures from 10 to 14, which is of the type using disk-pack glazing devices. Inasmuch as many of the elements are identical or similar to those of the glazing station 10 of figures 1 to 9, the same numbers plus 100 will be used in the figures.

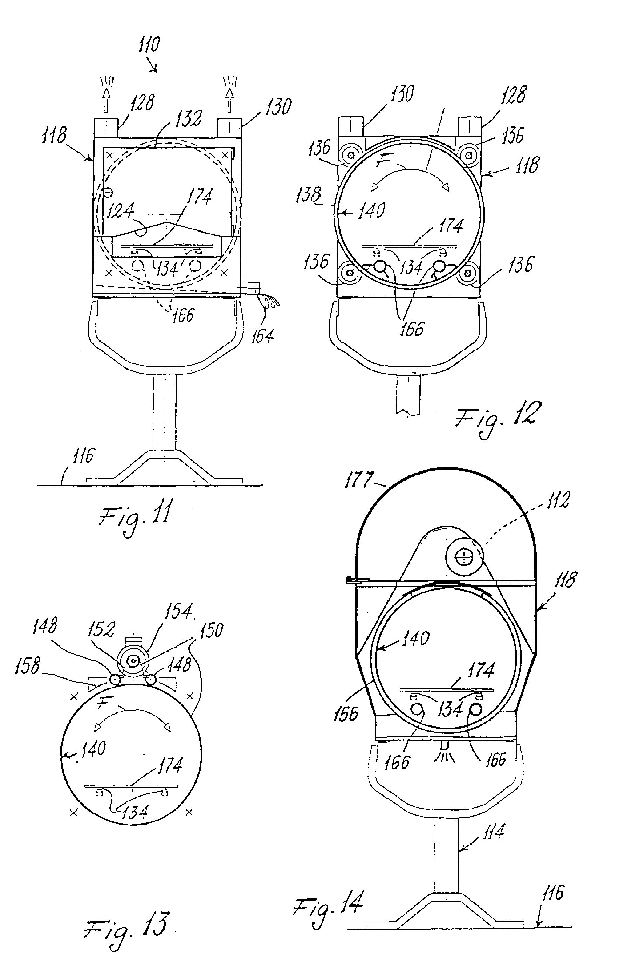

The station 110 comprises a hood 118 borne on a structure which is not illustrated for reasons of simplicity and which, in this second case too, may enable the station 110 to be removed. The hood 118 comprises two fixed end parts, respectively 120 and 122, in which conventional entry (not in the figures) and exit 124 (figure 11) openings are afforded. The two fixed end parts 120 and 122 comprise aspiration hoods, each provided with two aspiration intakes (126 and 128, 130). An inspection hatch 132 is afforded in the external surface of each of the fixed and parts 120 and 122 of the hood 118; the hatch 132 is removable to afford access to the inside of the hood 118. The hood 118 is crossed lengthwise by a conveyor belt 134 borne on a structure 114 fixed to the ground 116. The belts 134 bear the tiles 174 and carry them through the station 110.

A cylindrical intermediate part 140 is provided between the two end parts 120 and 122, which part 140 is rotatable about its own horizontal axis 146 and connects the fixed lateral parts 120, 122 and apart from its length is more or less the same as its counterpart 40 in the like station 10 previously described and illustrated in figure 8. The intermediate part 140 also exhibits a transversal slot (not shown) like the one denoted by 44 in figure 8.

In this case it can be advantageous to provide, in the intermediate part, a transversal slot which extends over the entire cylindrical surface thereof, which brings with it the need to provide an alternatingly rotating actuating device for each of the halves the intermediate part would in this case be divided into. The alternating rotary motion of the rotatable intermediate part 140 is obtained in the specific case similarly to the above-described station 10, and is therefore not described.

In this embodiment, as in the previous one, the slot (identical to slot 44 of figure 6) in the intermediate part 140 is covered by a fixed collar 156 (figure 10) which also supports the motor 154, as well as the disk-pack glazing device 112 and relative actuating device 160, the crossbar 158 resting at ends thereof on the fixed end parts 120 and 122. In this case, however, the fixed central section of the hood 118 is not limited to the collar 156. Instead, a known-type central fixed part 177 of hood is fixed thereto, the hood being typical of a station equipped with a disk-pack glazing device. As can be seen in figures 10 and 11, the part of the central portion which is above the horizontal plane passing through the axis of the disk-pack 120 is shaped like two equal and opposing half-cylinders, joined at their bases, and the central part continues vertically downwards and connects with the collar 156. Thus, in the illustrated embodiment, the fixed central portion of the hood 118 of the station 110 is composed of the sleeve 156 and the central part 177, the sleeve exhibiting a wide transversal slot defined by the line of intersection between the central part 177 and the sleeve 156.

Two perforated washing pipes 166 are located internally of the rotatable intermediate part, the glaze subsequently being removed via the discharges 163 and 164 before being recycled.

The operation of the glazing station 110, apart from the fact of having a disk-pack instead of a spray-gun, is the same as that of the first glazing station 10, so a description herein below would be redundant. In any case, in this embodiment too the washing of the internal surface of the rotatable intermediate part 140 with glaze being sprayed from the washing pipes 166, combined with the alternating rotation of the rotatable intermediate part 140, completely prevents the formation of drops which can fall on the tiles transiting through the station.

## Claims

1. A glazing station (10, 110) for glazing ceramic tiles or the like, which can be of the spray type (10) or the disk-pack type (110), and comprises a hood (18, 118) having two fixed end parts (20, 22, 120, 122) in one of which there is an opening for entrance and in the other of which there is an opening for exit (24, 124) of the transiting tiles (74, 174), characterised in that an intermediate part (40, 140) ofthe hood (18, 118) connecting the two end parts (20, 22; 120, 122) is cylindrical, has a horizontal or sub-horizontal axis (46, 146) and can rotate alternatingly about the axis (46, 146) through less than a full revolution thereof; the rotating intermediate part (40, 140) of the hood (18, 118) exhibiting a slot (44) which develops in a transversal direction to the rotation axis (46, 146) through an angular range which is at least equal to a range of an alternating rotary motion of the intermediate part (40, 140) of the hood (18, 118); and also characterised in that means for washing (66, 166) are provided internally of the rotating intermediate part of the hood (40, 140), which means are for washing over an internal wall of the hood (18, 118) with glaze; and also characterised in that a fixed central portion (56, 156, 177) is situated at the slot (44) in the rotating intermediate part (40, 140), which fixed central part (156, 177) is external to the rotatable intermediate part and covers the slot afforded in the rotatable intermediate part (40, 140); in the case of a cabin equipped with a disk-pack, the fixed central portion being conformed at least partially identically to a conventional central part as known from other hoods of this type.

2. The station (10; 110) of claim 1, wherein the angular range of alternating rotation of the rotatable intermediate part (40, 140) is adjustable.

3. The station (10) of claim 1, of a type equipped with a spray-gun (12), in which the fixed central portion comprises a cylindrical collar (56) which is coaxial to the rotatable intermediate part (40) and is provided with a slot (44) which extends transversally with respect to the axis (46) of the collar (56), the slot (44) enabling the spray gun (12) to face into and to operate internally of the station (10).

4. The station of claim 3, characterised in that the slot (44) can reach a maximum length of almost 360° in the rotatable intermediate part (40).

5. The station (110) of claim 1, of a type equipped with a disk-pack (112), in which the fixed central portion comprises a cylindrical collar (156) which is coaxial to the rotatable intermediate part (140), to which a conventional central part (177) of a hood for disk-pack type stations is fixed, the collar (156) affording a slot which is defined by an intersection between the central part (177) and the collar (156).

6. The station (110) of claim 5, in which the slot (144) of the rotatable intermediate part (140) has an angular extension which is equal to a full revolution thereof, in which each of two half-parts created by a division caused by the slot (144) of the intermediate part (140) is equipped with a relative alternatingly rotating actuating device.
